# EUROPEAN PATENT SPECIFICATION

(11) **EP 2 161 906 B1**
(45) Date of publication and mention of the grant of the patent: **09.11.2011**
(21) Application number: 08163754.8
(22) Date of filing: 05.09.2008
(51) Int. Cl.: H04M 1/02

(54) **Hand held mobile communication device**
Tragbares Mobilkommunikationsgerät
Dispositif de communication mobile portatif

(43) Date of publication of application: 10.03.2010
(73) Proprietor: RESEARCH IN MOTION LIMITED, Waterloo, Ontario N2L 3W8 (CA)
(72) Inventor: Ladouceur, Norman, Waterloo, Ontario N2T 1A2 (CA); Griffin, Jason, Kitchener, Ontario N2P 2L3 (CA); Rak, Roman, Waterloo, Ontario N2T 2V8 (CA)
(74) Representative: MERH-IP Matias Erny Reichl Hoffmann

(56) References cited:
- US-A1- 2005 083 642
- US-A1- 2006 148 544
- US-A1- 2008 180 398
- US-B1- 6 643 124

## Description

The present specification relates generally to mobile devices and in particular to a hand held mobile communication device with multiple display screens and user inputs.

Mobile devices are ubiquitous for business and personal use. Handheld mobile devices, sometimes referred to as mobile stations, are essentially portable computers having wireless capability, and come in various forms. These include Personal Digital Assistants (PDAs), cellular phones and smart phones. Reduced size is an advantage to portability, but presents challenges to inputting and display of information. Some known solutions to these challenges include the incorporation of combined text-entry keyboard and telephone keypads on mobile devices such as cellular telephones, wireless personal digital assistants (PDAs), two-way messaging devices and others.

It is also known in the art to provide a primary keypad for a mobile communication device and a movable flip cover that contains a secondary keypad, as disclosed in US Patent No. 6,226,501 (Weadon et al).

Further, CA 2,512,217 (Fyke et al) discloses a telephone keypad arranged on one side of a mobile communication device for providing an input signal corresponding to at least one telephone character, a keyboard arranged on the opposite side of the device for providing an input signal corresponding to at least one text character, where the telephone keypad is operable when the input device is in the first position, and the keyboard is operable when the input device is in the second position.

Moreover, it I also known in the art to provide mobile communication devices with touch-sensitive input screens, such as disclosed in US Patent Publication No. 2006/0066581 (Lyon et al).

US 6643124 B1 discloses a portable computing device with multiple display panels disposed to rotate or slide with respect to one another in a transition from a compact configuration to an expanded configuration.

US 2006/148544 A1 discloses a mobile communication terminal having a body part, a folder part hingedly connected to the body part, and a slide part coupled to the folder part such that the slide part is moved relative to the folder part in a sliding manner so that the mobile communication terminal is opened or closed.

Ergonomic comfort and facilitating fast and accurate text entry for e-mail, messaging, notes and other applications continue to pose challenges to the design of effective interfaces for such mobile devices.

### GENERAL

According to an aspect of this specification, there may be provided: a hand held mobile device capable of executing a software application, comprising: a top body portion; a bottom body portion; a hinge portion connecting said top and bottom body portions and permitting movement of said top and bottom body portions between closed and open positions; a first screen on said top body portion and accessible in said open position; and a second screen on said bottom body portion and accessible only in said open position, said second screen (210) slidable on said bottom body portion to reveal a keyboard when said top and bottom body portions are in said open position and said second screen is in an extended position.

### BRIEF DESCRIPTION OF THE DRAWINGS

Exemplary embodiments will be better understood with reference to the following Figures in which like numerals denote like parts and in which:

Figure 1 is a block diagram of components of a mobile communication device according to an exemplary embodiment;

Figure 2 is a perspective view of a mobile communication device, in a closed position, according to the preferred embodiment;

Figure 3 is a perspective view of the mobile communication device depicted in Figure 2 in a partially open position, revealing input/output devices thereof;

Figure 4 is a perspective view of the mobile communication device depicted in Figures 2 and 3 in a fully open position; and

Figure 5A is a top perspective view and Figure 5B is a bottom perspective view of the mobile communication device depicted in Figures 2 - 4, with a portion thereof slid open to reveal a further input device.

### DESCRIPTION OF PREFERRED EMBODIMENTS

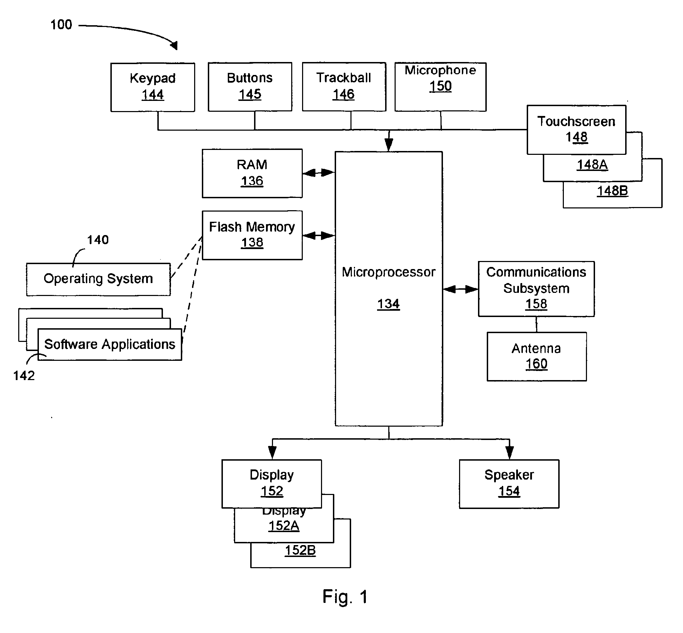

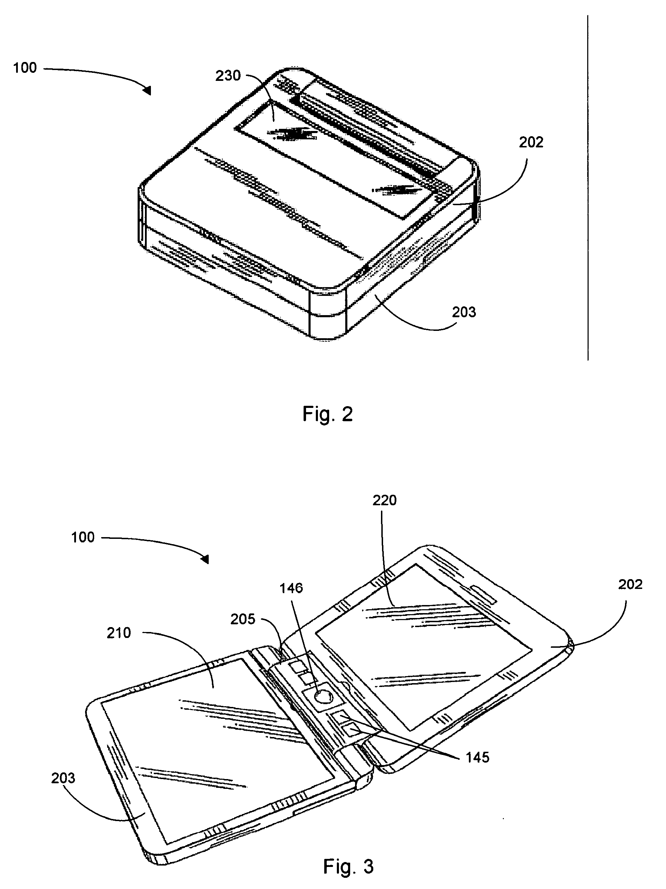

Referring briefly to Figure 1, a block diagram is provided of certain components, including internal components, within a mobile communication device 100 to which an exemplary interface, such as set forth in Figures 2 - 5, may be applied. The mobile communication device of Figure 1 includes a microprocessor 134 connected to a random access memory (RAM) 136 and a persistent storage device, which in the illustrated embodiment is a flash memory 138. Flash memory 138 is responsible for various nonvolatile storage functions of the mobile communication device 100, such as operating system software 140, executable by the microprocessor 134. It will be appreciated, however, that the operating system software 140 can be stored in other types of memory such as read-only memory (ROM). In the illustrated embodiment, software applications 142 are stored in the persistent storage device 138 for execution by the microprocessor 134 for carrying out various functions, as is known in the art. The microprocessor 134 receives input from various input devices including a keypad 144, buttons 145, a trackball 146, at least one touch screen 148, 148A, 148B, etc., and a microphone 150. The microprocessor 134 outputs to various output devices including at least one display 152, 152A, 152B, etc., such as an LCD display and a speaker 154. Other input devices (e.g. SEND and END keys, navigation keys or buttons, etc.) and output devices (e.g. LED message lamps, etc.) may also be provided. In some embodiments, the touch screen 148, 148A, 148B, etc., may be disposed so as to overlay the 152, 152A, 152B, etc.

The mobile device 100 may send and receive communication signals over the wireless network after required network registration or activation procedures have been completed. Network access is associated with a subscriber or user of the mobile device via a SIM/RUIM card (i.e. Subscriber Identity Module or a Removable User Identity Module) within the communication subsystem 158. The SIM card (not shown) or RUIM is one type of a conventional "smart card" that can be used to identify a subscriber of the mobile device and to personalize the mobile device, among other things.

In a data communication mode, a received signal such as an email message or Web page is processed by the communications subsystem 158 and input to the microprocessor 134 for further processing and output to the displays 152, 152A, 152B, etc. A user of the mobile communication device 100 can also compose data items within a software application such as a messaging application, using the keypad 144 and/or touch screen 148, 148A, 148B, etc., in conjunction with display 152, 152A, 152B, etc. Such composed items can then be transmitted over the communications network through the communications subsystem 158 and antenna 160.

For voice communications, the overall operation of the mobile device 100 is substantially similar, except that the received signals are output to the speaker 154, and signals for transmission are generated by the microphone 150. Alternative voice or audio I/O subsystems, such as a voice message recording subsystem, can also be implemented on the mobile device. Although voice or audio signal output is accomplished primarily through the speaker 154, the display 152, 152A, etc. can also be used to provide additional information such as the identity of a calling party, duration of a voice call, or other voice call related information.

As indicated above, the flash memory 138 stores a plurality of applications 142 executable by the microprocessor 134, such as a message application for allowing a user to send and receive electronic messages (email), an attachment content handling application, which operates in conjunction with the message application to provide the user with attachment content handling options for messages that have an associated attachment. The attachment may be a document converted to plain text, an audio file compressed to WAV or an image file, for example. Once the user selects an attachment document for viewing according to a preferred attachment content handling option, the attachment content handling application generates a request for an attachment server to download the transcoded/compressed attachment, which can thereafter be viewed/played using an attachment viewer application.

In the embodiment of Figure 1, the mobile device 100 is based on the computing environment and functionality of a wireless personal digital assistant (PDA). It will be understood, however, that the mobile device is not limited to communication devices such as wireless personal digital assistants. Other mobile devices are possible, such as Personal Digital Assistants (with or without communication capabilities), smart telephones, portable entertainment devices, etc.

From the foregoing, it will be apparent that the mobile device 100 performs a wide variety of complex functions and that it is a challenge to provide an interface that is sufficiently compact to match the form factor of the handheld device while providing the necessary level of functionality.

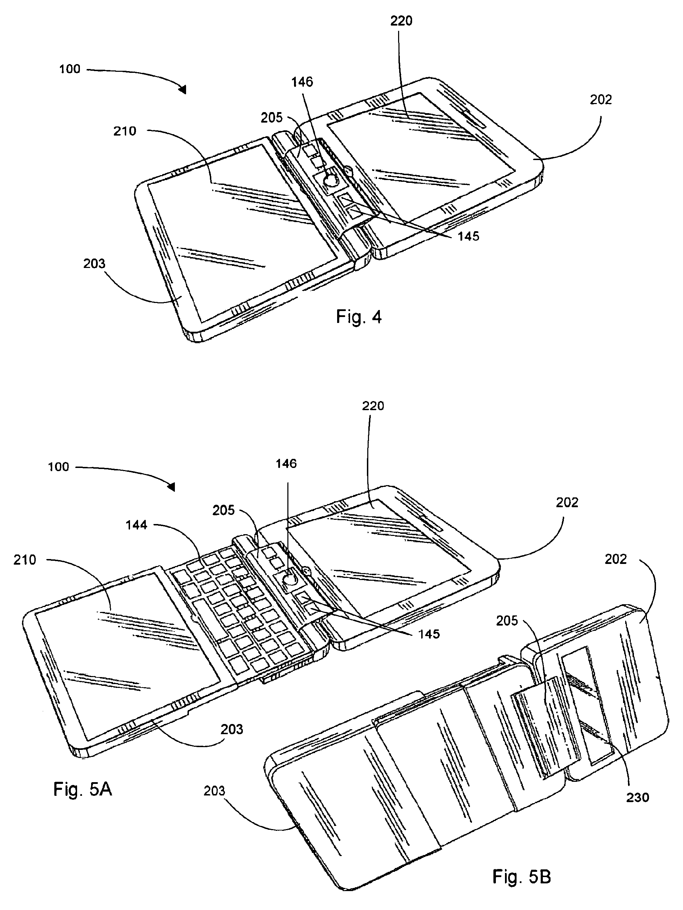

Figures 2 - 5 depict an exemplary embodiment of a mobile communication device 100 as depicted in Figure 1. Certain components, such as speaker 154, microphone 150, antenna 160, etc., are normally embedded within the device and therefore are not shown. The device 100 is of 'flip' configuration having a top body portion 202 and a bottom body portion 203 connected via a hinge portion 205. From Figure 5, it will be noted that hinge portion 205 is of double-hinge design. The device 100 incorporates an interface having multiple inputs/outputs selectively available for use based on various open and closed configurations of the device, and software applications 142, as set forth in greater detail below.

When the top body portion 102 of mobile device 100 is opened from a closed position (Figure 2) to an open position (Figures 3 - 5) a pair of display screens 210 and 220 are revealed, either of which may or may not operate as touch screens. Multiple ranges of open positions may be achieved by providing a detent or stop in the mechanism of hinge portion 205 at predetermined angles of travel (e.g. 90 degrees and 155 degrees partially open, fully open at 180 degrees, etc.). In the context of the electronic functionality discussed with reference to Figure 1, either of screens 210 or 220 may operate as simple displays 152, 152A, 152B, etc., such as LCD displays, or as touch screen 148, 148A, 148B, etc.

In the fully open position (Figures 5A and 5B), screen 210 may be caused to slide open to reveal a keyboard 144. Preferably, keyboard 144 is a standard QWERTY keyboard for providing ergonomic comfort when entering text/numbers for functions such as email, taking notes, Internet access, calendar, to-do list and others. Alternatively, keyboard 144 can be arranged in other conventional patterns, such as a DVORAK style keyboard, an alphabetic style keyboard, a QWERTZ style keyboard, an AZERTY style keyboard, a calculator keyboard, a telephone keypad, or the like.

Both the top body portion 202 and the bottom body portion 203 are attached to the hinge portion 205 using an independent hinge joint (i.e. a double hinge), as discussed above and as shown in Figure 5B.

The function of screens 210 and 220, when device 100 is in the open position (Figures 4 and 5), may depend on whether the screen 210 of bottom body portion 203 has been extended to reveal keyboard 144 and/or on which software application 142 is being executed by the microprocessor 134. In that regard, as discussed above, buttons 145, trackball 146, or other auxiliary input device(s), may be used to navigate the screens 210 and/or 220 such as by launching a menu selection using buttons 145 or moving a cursor to select an application 142 or to perform other menu-based functions.

Thus, when an email application or a word processing is running, the text being typed on keyboard 144 can be displayed on screen 220 with mis-typed words being highlighted, and screen 210 can operate as a touch screen for listing correct word options (i.e. displayed by a spell check option) for touch selection so as to replace the highlighted word on screen 220. Similarly, screen 210 can operate as a touch screen for listing word options (i.e. displayed by a text disambiguation option) for touch selection so as to replace partially completed words on screen 220.

When an email application or a web browser application are in use, screen 220 can operate as a main display while screen 210 is used to display document or image attachments.

When a mapping or GPS application is running on the device 100, screens 210 and 220 may by configured to display different zoom levels of an area being rendered.

When a phone application is in use screen 210 may operate as a touch screen telephone dial pad while screen 220 shows the number being dialed.

As a further alternative, screen 220 may operate as a secondary display for an additional software application 142 (e.g. calculator, address book, map, etc.), while screen 210 operates as the primary display for a foreground application (e.g. email, calendar, etc.).

A person of skill in the art can appreciate that a variety of sensors, such as induction, opto-mechanical, or electro-mechanical contacts, may be used to determine when the top and bottom portions 202 and 203 are in the closed (Figure 2) or open positions (Figures 2 - 5) and whether the bottom portion 203 has been extended (Figures 5A and 5B) to reveal the keyboard 144.

In the closed position of Figure 2, a further display screen 230 may be used, for example, to preview information such as caller name or number of an incoming phone call or an email sender name and subject line of a received email message. As shown in Figures 2 and 5B, the screen 230 is preferably smaller in size than the screens 210 and 220.

Preferably, the screens 210, 220, 230, and keyboard 144 of the mobile device 100 can be optimally configured by changing the relative disposition of top and bottom body portions 202 and 203 (i.e. closed, open, keyboard extended/retracted) to meet different application needs and to facilitate effective data entry.
Specific embodiments have been shown and described herein. However, modifications and variations may occur to those skilled in the art. For example, as discussed above, although the exemplary embodiment has been described in terms of implementation on a portable handheld electronic device, the principles set forth herein may be applied to other devices such as portable entertainment devices. All such modifications and variations are believed to be within the sphere and scope of the present embodiment.

## Claims

1. A hand held mobile device capable of executing a software application, comprising: a top body portion (202); a bottom body portion (203); a hinge portion (205) connecting said top and bottom body portions and permitting movement of said top and bottom body portions between closed and open positions; a first screen (220) on said top body portion (202) and accessible in said open position; and a second screen (210) on said bottom body portion (202) and accessible only in said open position, said second screen (210) slidable on said bottom body portion (203) to reveal a keyboard (146) when said top and bottom body portions are in said open position and said second screen is in an extended position.

2. The device of claim 1, further comprising a third screen (230) on an opposite side of said top body portion (202) than said first screen (220) for use as a preview screen when said top and bottom body portions are in said closed position.

3. The device of claim 1 or claim 2, wherein at least one of said first or second screens (220, 210) is adapted to function as a touch screen based on at least one function of said software application and whether said second screen (210) is extended to reveal said keyboard (144).

4. The device of claim 3, wherein said second screen (210) is adapted to operate as a touch screen when said software application function comprises text entry and said second screen (210) is extended to reveal said keyboard (144).

5. The device of claim 3, wherein said first screen (220) is adapted to display text and said second screen (210) is adapted to display attachments when said software application function comprises email viewing functionality.

6. The device of claim 3, wherein said first screen (220) is adapted to display map data at a first zoom level and said second screen (210) is adapted to display map data a second zoom level when said software application function comprises mapping functionality.

7. The device of claim 3, wherein said second screen (210) is adapted to operate as a touch screen telephone dial pad when said software application function comprises phone functionality.

8. The device of any one of the preceding claims, wherein the keyboard comprises any one of a QWERTY layout keyboard, a Dvorak layout keyboard, a QWERTZ layout keyboard, an AZERTY layout keyboard, a calculator layout or a phone keypad layout.

9. The device of any one of the preceding claims, wherein said device further comprises sensor means for sensing said open, closed and extended positions.

10. The device of any one of the preceding claims, wherein said hinge portion (205) comprises at least one auxiliary input device accessible in said open position.

11. The device of claim 10, wherein the auxiliary input device comprises a trackball.

12. The device of any one of the preceding claims, wherein said hinge portion (205) comprises a detent at predetermined angles between said open and closed positions.

## Patentansprüche

1. Handgehaltene mobile Vorrichtung, die eine Softwareanwendung ausführen kann, die aufweist: einen oberen Körperteil (202); einen unteren Körperteil (203); einen Scharnier- bzw. Verbindungsteil (205), der die oberen und unteren Körperteile verbindet und eine Bewegung der oberen und unteren Körperteile zwischen geschlossenen und offenen Positionen ermöglicht, einen ersten Bildschirm (220) auf dem oberen Körperteil (202) und in der offenen Position zugänglich; und einen zweiten Bildschirm (210) auf dem unteren Körperteil (202) und nur in der offenen Position zugänglich, wobei der zweite Bildschirm (210) auf dem unteren Körperteil (203) verschiebbar ist, um eine Tastatur (146) offenzulegen, wenn die oberen und unteren Körperteile in der offenen Position sind und der zweite Bildschirm in einer herausgezogenen Position ist.

2. Vorrichtung gemäß Anspruch 1, die weiter einen dritten Bildschirm (230) aufweist auf einer entgegengesetzten Seite des oberen Körperteils (202) als der erste Bildschirm (220) zur Verwendung als ein Vorschau-Bildschirm, wenn die oberen und unteren Körperteile in der geschlossenen Position sind.

3. Vorrichtung gemäß Anspruch 1 oder Anspruch 2, wobei zumindest einer der ersten oder zweiten Bildschirme (220, 210) ausgebildet ist, als ein Berührungsbildschirm zu funktionieren basierend auf zumindest einer Funktion der Softwareanwendung, und ob der zweite Bildschirm (210) herausgezogen ist, um die Tastatur (144) offenzulegen.

4. Vorrichtung gemäß Anspruch 3, wobei der zweite Bildschirm (210) ausgebildet ist, als ein Berührungsbildschirm zu arbeiten, wenn die Softwareanwendungsfunktion eine Texteingabe aufweist und der zweite Bildschirm (210) herausgezogen ist, um die Tastatur (144) offenzulegen,

5. Vorrichtung gemäß Anspruch 3, wobei der erste Bildschirm (220) ausgebildet ist, einen Text anzuzeigen, und der zweite Bildschirm (210) ausgebildet ist, Anhänge anzuzeigen, wenn die Softwareanwendungsfunktion eine Email-Betrachtungs-Funktionalität aufweist.

6. Vorrichtung gemäß Anspruch 3, wobei der erste Bildschirm (220) ausgebildet ist, Kartendaten mit einem ersten Zoompegel anzuzeigen, und der zweite Bildschirm (210) ausgebildet ist, Kartendaten mit einem zweiten Zoompegel anzuzeigen, wenn die Softwareanwendungsfunktion eine Kartenfunktionalität aufweist.

7. Vorrichtung gemäß Anspruch 3, wobei der zweite Bildschirm (210) ausgebildet ist, als eine Berührungsbildschirm-Telefontastatur zu arbeiten, wenn die Softwareanwendungsfunktion eine Telefonfunktionalität aufweist.

8. Vorrichtung gemäß einem der vorhergehenden Ansprüche, wobei die Tastatur eine aus einer QWERTY-Layout-Tastatur, einer Dvorak-Layout-Tastatur, einer QWERTZ-Layout-Tastatur, einer AZERTY-Layout-Tastatur, einem Taschenrechner-Layout oder einem Telefontastatur-Layout aufweist.

9. Vorrichtung gemäß einem der vorhergehenden Ansprüche, wobei die Vorrichtung weiter Sensormittel aufweist zum Erfassen der offenen, geschlossenen und herausgezogenen Positionen.

10. Vorrichtung gemäß einem der vorhergehenden Ansprüche, wobei der Scharnierteil (205) zumindest eine zusätzliche Eingabevorrichtung aufweist, die in der offenen Position zugänglich ist.

11. Vorrichtung gemäß Anspruch 10, wobei die zusätzliche Eingabevorrichtung einen Trackball aufweist.

12. Vorrichtung gemäß einem der vorhergehenden Ansprüche, wobei der Scharnierteil (205) eine Arretierung mit vorgegebenen Winkeln zwischen den offenen und geschlossenen Positionen aufweist.

## Revendications

1. Dispositif mobile portatif capable d'exécuter une application logicielle, comprenant : une partie supérieure de corps (202) ; une partie inférieure de corps (203) ; une partie de charnière (205) connectant lesdites parties supérieure et inférieure de corps et permettant le mouvement desdites partiels supérieure et inférieure de corps entre une position d'ouverture et de fermeture ; un premier écran d'affichage (220) sur ladite partie supérieure de corps (202), accessible dans ladite position d'ouverture ; et un deuxième écran d'affichage (210) sur ladite partie inférieure de corps (203) et accessible uniquement dans ladite position d'ouverture, ledit deuxième écran d'affichage (210) pouvant coulisser sur ladite partie inférieure de corps (203) pour dégager un clavier (146) lorsque lesdites parties supérieure et inférieure de corps sont dans ladite position d'ouverture et que ledit deuxième écran d'affichage est dans une position d'extension.

2. Dispositif selon la revendication 1, comprenant en outre un troisième écran d'affichage (230) se trouvant sur ladite partie supérieure de corps (202) d'un côté opposé audit premier écran d'affichage (220) et destiné à être utilisé comme écran due prévisualisation lorsque lesdites parties supérieure et inférieure de corps sont dans ladite position de fermeture.

3. Dispositif selon la revendication 1 ou la revendication 2, dans lequel au moins un des premier et deuxième écrans d'affichage (220, 210) est conçu pour fonctionner comme écran tactile sur la base d'au moins une fonction de ladite application logicielle et sur la base du fait que ledit deuxième écran d'affichage (210) est étendu pour dégager ledit clavier (144).

4. Dispositif selon la revendication 3, dans lequel ledit deuxième écran d'affichage (210) est conçu pour fonctionner comme écran tactile lorsque ladite fonction de l'application logicielle comprend une saisie de texte et lorsque ledit deuxième écran d'affichage (210) est étendu pour dégager ledit clavier (144).

5. Dispositif selon la revendication 3, dans lequel ledit premier écran d'affichage (220) est conçu pour afficher du texte et ledit deuxième écran d'affichage (210) est conçu pour afficher des pièces jointes lorsque ladite fonction de l'application logicielle comprend une fonctionnalité de visualisation de courriel.

6. Dispositif selon la revendication 3, dans lequel ledit premier écran d'affichage (220) est conçu pour afficher des données cartographiques à un premier niveau de zoom et ledit deuxième écran d'affichage (210) est conçu pour afficher des données cartographiques à un deuxième niveau de zoom lorsque ladite fonction de l'application logicielle comprend une fonctionnalité de cartographie.

7. Dispositif selon la revendication 3, dans lequel ledit deuxième écran d'affichage (210) est conçu pour fonctionner comme clavier tactile de numérotation téléphonique lorsque ladite fonction de l'application logicielle comprend une fonctionnalité téléphonique.

8. Dispositif selon l'une quelconque des revendications précédentes, dans lequel le clavier possède un agencement de clavier parmi les suivants : agencement de clavier QWERTY, agencement de clavier Dvorak, agencement de clavier QWERTZ, agencement de clavier AZERTY, agencement de clavier de calculatrice est agencement de clavier de numérotation téléphonique.

9. Dispositif selon l'une quelconque des revendications précédentes, dans lequel ledit dispositif comprend en outre un moyen de détection destiné à détecter lesdites positions d'ouverture, de fermeture et d'extension.

10. Dispositif selon l'une quelconque des revendications précédentes, dans lequel ladite partie de charnière (205) comprend au moines un dispositif d'entrée auxiliaire accessible dans ladite position d'ouverture.

11. Dispositif selon la revendication 10, dans lequel ledit dispositif d'entrée auxiliaire est constitué d'une bille de commande,

12. Dispositif selon l'une quelconque des revendications précédentes, dans lequel ladite partie de charnière (205) comprend des crans d'arrêt à des angles prédéterminés entre lesdites positions d'ouverture et de fermeture.
